# EUROPEAN PATENT SPECIFICATION

(11) **EP 2 369 898 B1**
(45) Date of publication and mention of the grant of the patent: **02.01.2019**
(21) Application number: 11158094.0
(22) Date of filing: 14.03.2011
(51) Int. Cl.: H05B 33/08

(54) **LED lamp, lighting device and illumination device**
LED-Lampe, Leuchtvorrichtung und Beleuchtungsvorrichtung
Lampe à DEL, dispositif d'éclairage et dispositif d'illumination

(30) Priority: 23.03.2010 JP 2010066467
(43) Date of publication of application: 28.09.2011
(73) Proprietor: Panasonic Intellectual Property Management Co., Ltd., Osaka-shi, Osaka 540-6207 (JP)
(72) Inventor: Hamamoto, Katunobu, Neyagawa Osaka (JP); Fujimoto, Kouji, Katano, Osaka (JP)
(74) Representative: Rüger Abel

(56) References cited:
- WO-A1-2009/136322

## Description

### [Field of the Invention]

This invention relates to an LED lamp used in combination with a discharge lamp lighting device, a lighting device used for both the LED lamp and a discharge lamp, and an illumination device equipped with the LED lamp and the lighting device.

### [Background Art]

Conventionally, an LED lamp, a lighting device and an illumination device has been known in which a constant current circuit to rectify a current inputted from the illumination device and regulates the rectified current is provided (see Patent Literature 1, for example).

### [Conventional Technique Literature]

### [Patent Literature]

[Patent Literature 1] JP 2009-272088A (Fig. 1 and Claim 1)

### [Disclosure of the Invention]

### [Problems to be solved by the Invention]

In recent years, an LED (Light Emitting Diode) has been focused in view of power saving and long life and it is gradually becoming popular as a light source for illuminating. However, a fluorescent lamp is widely popular as a main illumination in offices, factories, ordinary houses and the like and a quantity scale of an LED illumination device is still small and the LED illumination device is in a transit period for becoming popular. Furthermore, it can be said that an LED element itself is also developing and it is expected that the LED element will be reduced in cost and improved in efficiency.

In such background, an LED lamp attachable to a fluorescent lamp illumination device has been proposed. However, in such the conventional LED lamp, the LED may be degraded by flowing of an over current due to a difference in a lighting scheme of the fluorescent lamp and a difference in voltage, current, frequency or the like depending on the individual discharge lamp lighting devices.

Above Patent Literature 1 was proposed for the purpose to prevent the LED from being degraded by flowing of the over current due to the difference in voltage, current, frequency or the like depending on the individual discharge lamp lighting devices.

By the way, the lighting device applied to the above Patent Literature1 has a series circuit including two switching elements connected between output ends of a DC current and a resonance circuit including a capacitor, a coil, a capacitor and a fluorescent lamp which is connected to both ends of one of the switching elements. In addition, a control part causes the switching elements to drive on/off alternately to change a driving frequency, thereby controlling precedent preheating, discharge starting and rated lighting of the fluorescent lamp.

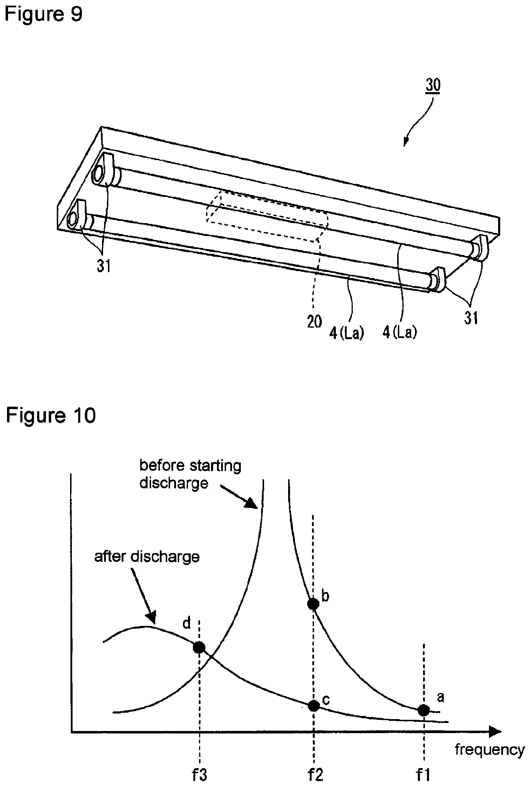

As shown in Fig. 10 herein, since an impedance of the fluorescent lamp is infinity "∞" before starting discharge and the impedance corresponds to the fluorescent lamp after the discharge, the voltage across the fluorescent lamp is increased to a discharge starting voltage to start the discharge after a filament of the fluorescent lamp is properly preheated by changing the driving frequency, f1 → f2 → f3, and then, the rated optical output is obtained. The operation point is changed in the order of a → b → c → d.

In this way, the driving frequency and the operation point of the lighting device transit such as a → b → c → d. In addition, in the case where the LED is combined with the lighting device as a light source, a load generally includes a plurality of LEDs and a rectifying circuit. In this case, since each of the LED is basically a diode, its forward voltage VF is substantially constant and its forward current IF depends on the application condition of the power source, the impedances thereof greatly depends on an application condition. That is to say, since the impedance of the load is varied depending on an application condition of the power source from the lighting device, it is required to consider which operation point is used in combination of the lighting device and a load including the LEDs. Although two curves for the lamp impedance before the discharge (∞) and the lamp impedance during rated lighting are shown in Fig. 10, since the characteristic between the two curves or other characteristics may be obtained depending on the impedance of the load, excessive electrical stress is possibly applied on both of a load side and a lighting device side. In addition, the numbers of the outputs of the lighting device and the LEDs are also determined approximately depending on the characteristics thereof and the degree of freedom for the light source design is lost.

Therefore, in the above Patent Literature 1, the numbers of parts for composing the constant current circuit are increased and the problems such as complicating the circuit, increasing the cost and increasing the circuit in size have not been solved.

WO 2009/064099 A2 shows an LED lamp according to the preamble of claim 1.

The present invention has been made to solve the prescribed problems and directs to provide an LED lamp in which failures and degradation of the LEDs are suppressed even in combination with a discharge lamp lighting device and a lighting device capable of using for both of the LED lamp and a discharge lamp as well as an illumination device using thereof.

### [Means adapted to solve the Problems]

The present invention refers to an LED lamp according to claim 1 and an illumination device according to claim 2.

An LED lamp according to the present invention includes a light emitting circuit having an LED adapted to emit light by an electric current inputted from a discharge lamp illumination device and a capacitive component connected in parallel to an output of the discharge lamp illumination device, wherein the LED lamp is attachable to the discharge lamp illumination device.

In the LED lamp according to the present invention, a lighting device used for the discharge lamp illumination device is capable of using both of a discharge lamp and the LED lamp as a load, the lighting device has four output parts and the capacitive component between two output parts on a non-power source side, and the LED lamp is not connected to at least one output part on the non-power source side of the lighting device.

The illumination device according to the present invention used the LED lamp and the lighting device.

### [Effect of the Invention]

According to an LED lamp, a lighting device and an illumination device of the present invention, there can be effectively provided that the LED lamp in which failures and degradation of the LEDs are suppressed even in combination with a discharge lamp lighting device and the lighting device capable of using for both of the LED lamp and a discharge lamp as well as the illumination device using thereof.

### [Brief Description of the Drawings]

[Fig. 1] Fig. 1 is a circuit configuration diagram of a lighting device on which an LED lamp of a first embodiment of the present invention is mounted.
[Fig. 2] Fig. 2 is a resonance characteristic chart of the lighting device of Fig. 1.
[Fig. 3] Fig. 3 is a resonance characteristic chart of the lighting device of Fig. 1.
[Fig. 4] Fig. 4 is a circuit configuration diagram of the LED lamp of the first embodiment according to the present invention.
[Fig. 5] Fig. 5 is a circuit configuration diagram of an LED lamp of a second embodiment according to the present invention.
[Fig. 6] Fig. 6 is a circuit configuration diagram of an LED lamp of a third embodiment according to the present invention.
[Fig. 7] Fig. 7 is a circuit configuration diagram of an LED lamp of an embodiment that is not part of the present invention.
[Fig. 8] Fig. 8 is a circuit configuration diagram of a lighting device on which the LED lamp of Fig. 7.
[Fig. 9] Fig. 9 is an appearance bottom perspective view of an illumination device on which the LED lamp and a lighting device of the embodiment according Fig. 7 and 8 are mounted, which is seen obliquely from beneath.
[Fig. 10] Fig. 10 is a resonance characteristic diagram of a conventional lighting device.

### [Best Mode for Carrying Out the Invention]

Referring to the drawings, an LED lamp, a lighting device and an illumination device according to a plurality embodiments of the present invention will be described below.

### (First Embodiment)

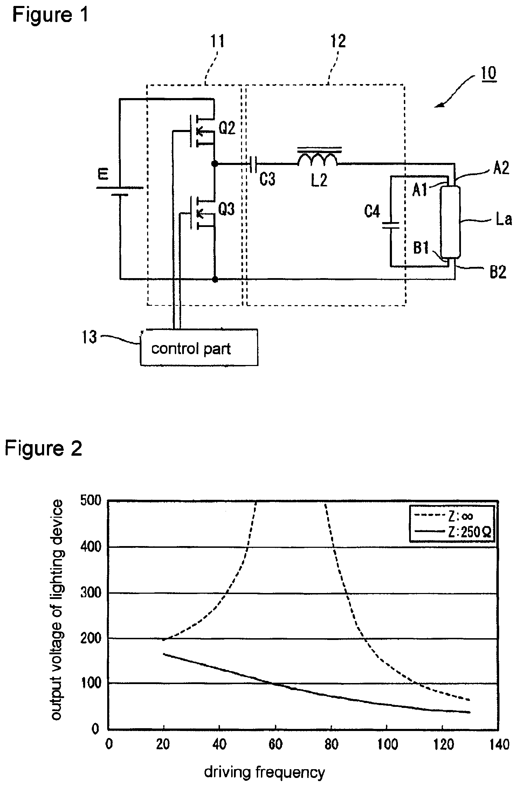

As shown in Fig. 1, a lighting device 10, a first embodiment according to the present invention, includes a direct power source E, an inverter circuit 11 having a series circuit with two N-channel type switching elements Q2 and Q3 connected between output ends of the direct power source E, a resonance circuit 12 having a capacitor C3 connected to a source of the switching element Q2 and a drain of the switching element Q3, a ballast choke coil L2 and a capacitor C4 and a control part 13 connected to gates of the switching elements Q2 and Q3.

The lighting device 10 is changed in the driving frequency, f1 → f2 → f3 during starting to drive on/off the switching elements Q2 and Q3 alternately by the control part 13 to provide lighting control for a discharge lamp La (see Fig. 10). The output from the lighting device 10 is an AC voltage with a high frequency of approximately 50 to 150 kHz in accordance with the driving frequency. The lighting circuit 10 has base pins A1, A2, B1 and B2.

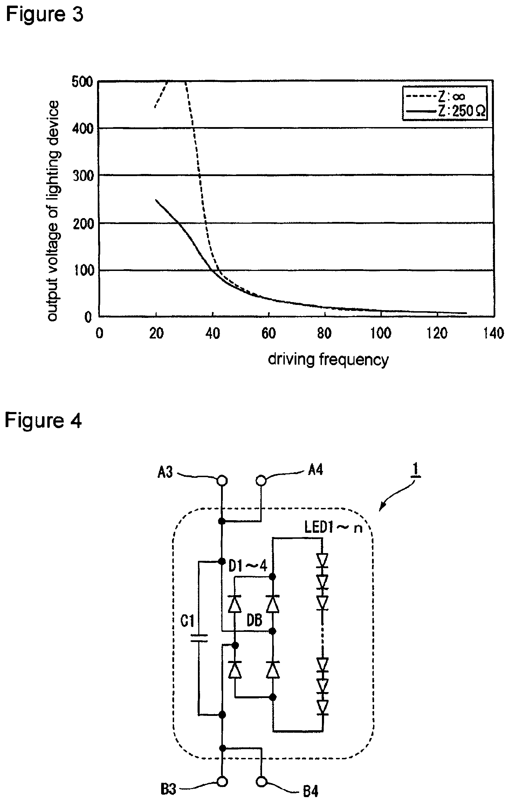

In comparison between a resonance characteristic of a load impedance: ∞ and 250 Ω when a voltage of the direct power source E is 400 V, the ballast choke coil L2 is 1.2 mH and the capacitor C4 of 4700 pF in the lighting device 10 as shown in Fig. 2 and a resonance characteristic when the capacitive component of 0.027 µF is connected in parallel to the output of the discharge lamp illumination device in the lighting device 10 as shown in Fig. 3, it can be understood: an output voltage becomes substantially constant (the difference between two curves, i.e. a voltage difference in Fig. 2 is smaller than that in Fig. 3) independent of the impedance of a load (light emitting circuit) by connecting the capacitive component in parallel to the output of the discharge lamp illumination device; and the possibility to apply an excessive electrical stress on both of the load side and the lighting device side is reduced as much as possible even if the load impedance is changed during changing the driving frequency f1 → f2 → f3.

As shown in Fig. 4, an LED lamp 1 which is the first embodiment of the present invention has terminals A3, A4, B3 and B4 which short circuit respectively base pins A1, A2, B1 and B2 of portions corresponding to the filament of the discharge lamp La, the capacitor C1 is connected between the terminals A3, A4, B3 and B4 and a diode bridge DB including diodes D1, D2, D3 and D4 is connected in parallel to the capacitor C1. Furthermore, light emitting circuit LEDs 1 - n are connected in series with each other and are connected to the output of the diode bridge DB.

When the LED lamp 1 is mounted on the lighting device 10, an AC voltage at an output of the lighting device 10 is rectified by the diode bridge DB into a direct current, and the direct current is supplied to the light emitting circuit LEDs 1 - n to light the light emitting circuit LEDs 1 - n. At this time, the capacitor C1 in the LED lamp 1 is connected in parallel to the capacitor C4 of the resonance circuit 12 of the lighting device 10 and the resonance characteristic in whole becomes the characteristic as shown in Fig. 3. Thus, since there is no possibility that the voltage is applied excessively even if how is a condition of the impedances of the light emitting circuit LEDs 1 - n, the failure and the degradation of the light emitting circuit LEDs 1 - n can be suppressed. In addition, since the lighting device 10 is not operated in a phase advancing area of the resonance characteristic even if the driving frequency is changed, f1 → f2 → f3, during starting and the excessive electrical stress is not applied on the lighting device 10, the failures and degradation of the lighting device 10 can be suppressed.

Thus, in the LED lamp 1 of the first embodiment, the capacitor C1 which is the capacitive component connected in parallel to the output of the discharge lamp illumination device is provided. Accordingly, in the LED lamp 1 of the first embodiment, the failures and degradation of the LED lamp 1 of the first embodiment can be suppressed in a simple configuration as well as the failures and degradation of the lighting device 10 to be combined can be suppressed.

### (Second Embodiment)

Next, an LED lamp of a second embodiment of the present invention will be described below. It should be noted that in each of the embodiments described below, the description about overlapping components and functionally similar components with the first embodiment described above will be simplified or omitted through designating them by the same or corresponding reference characters.

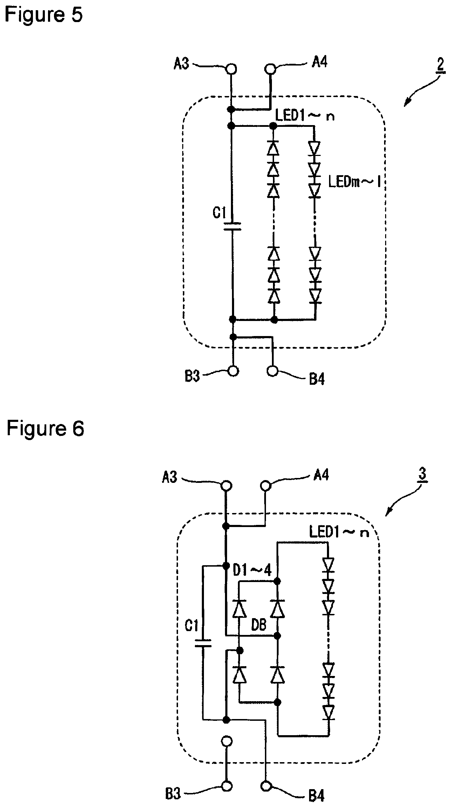

As shown in Fig. 5, an LED lamp 2 of the second embodiment of the present invention has terminals A3, A4, B3 and B4 which short circuit respectively base pins A1, A2, B1 and B2 of portions corresponding to a filament of the discharge lamp La, and the capacitor C1 is connected between the terminals A3, A4, B3 and B4. Furthermore, a plurality of light emitting circuit LEDs 1 - n connected in series and a plurality of light emitting circuit LEDs m - 1 connected in series are connected in parallel in an opposing direction and are connected to the capacitor C1. In the LED lamp 2, the light emitting circuit LEDs 1 - n and the light emitting circuit LEDs m - 1 is lighted alternately depending on whether an AC voltage is positive or negative. Likewise the first embodiment, a resonance characteristic is changed by the capacitor C1.

Thus, in the LED lamp 2 of the second embodiment, the possibility that an electric stress is excessively applied on both of the LED lamp 3 and the lighting device 10 can be reduced as much as possible in a simple configuration.

### (Third Embodiment)

Next, an LED lamp of a third embodiment of the present invention will be described.
As shown in Fig. 6, the LED lamp 3 of the third embodiment of the present invention has short circuited terminals A3 and A4 of portions of a filament of a discharge lamp La on its one end and terminals B3 and B4 on the other end. The terminal B3 on the other side has no electric connection and the terminal A4 is connected to a capacitor C1.

Between the lighting circuit 10 and the LED lamp 3, the base pin A1 is connected to the terminal A3, the base pin A2 is connected to the terminal A4, the base pin B1 is connected to the terminal B3 and the base pin B2 is connected to the terminal B4. Since the terminal B3 of the LED lamp 3 has no electric connection herein, the LED lamp 3 is not electrically connected to the capacitor C4 in the lighting device 10. Thus, the resonance characteristics shown in Figs. 2 and 3 are mainly determined by the impedances of the coil L2 of the resonance circuit 12 in the lighting circuit 10, the capacitor C1 which is a capacitive component added to the LED lamp 3 and the light emitting circuit LEDs 1 - n of the LED lamp 3.

Thus, in the LED lamp 3 of the third embodiment, since the capacitor C4 has no influence to the resonance characteristic, the capacitor C4 can be combined to the LED lamp 3 even if the lighting device 10 has the different capacitor C4, thereby it becomes possible to suppress the failures and degradation of the LED lamp 3 and the lighting device 10 in a simple configuration.

### (Fourth Embodiment)

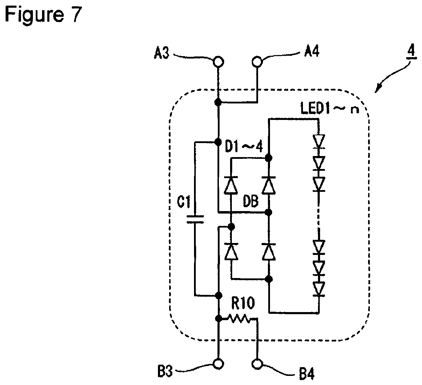

Next, a LED lamp of a fourth embodiment of the present invention will be described below.
As shown in Fig. 7, the LED lamp 4 of the fourth embodiment of the present invention has the capacitor C1 connected between the terminal A3 and the terminal B3 and the diode bridge DB connected to the capacitor C1 in parallel. The light emitting circuit LEDs 1 - n are connected in series with each other and are connected to an output of the diode bridge DB. Furthermore, the terminal A3 and the terminal A4 are short circuited and a resistance R10 (for example 1 kQ) is connected to the terminal B3 and the terminal B4.

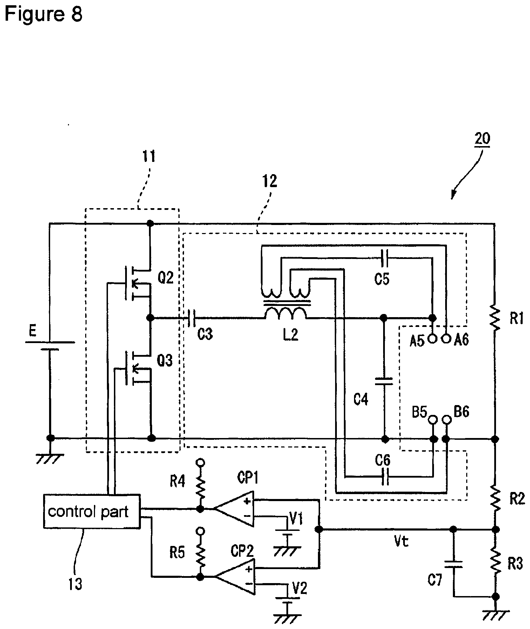

As shown in Fig. 8, a lighting device 20 on which the LED lamp 4 is mounted includes a direct power source E, an inverter circuit 11 having series circuit with two N-channel type switching elements Q2 and Q3 connected between output ends of the direct power source E, a resonance circuit 12 having the capacitor C3 connected to a source of the switching element Q2 and a drain of the switching element Q3, a ballast choke coil L2, a capacitor C4, a capacitor C5 and a capacitor C6, and a control part 13 connected to gates of the switching elements Q2 and Q3. In the lighting device 20, the switching elements Q2 and Q3 is driven on/off alternately by the control part 13.

Two secondary windings of the ballast choke coil L2 are connected to the output terminals A5 - A6 and B5 - B6 via the capacitor C5 and C6, respectively. In addition, resistors R1, R2 and R3 are connected in series between the output ends of the direct power source E, the connecting points of the resistor R1 and R2 are connected to the output terminal B6. A capacitor C7 is connected to the resistor R3 in parallel and the capacitor C7 is connected to each of positive terminals of comparators CP1 and CP2. Constant voltages V1 and V2 are inputted to negative terminals of the comparators CP1 and CP2, respectively (V1 < V2) and the outputs of the comparators CP1 and CP2 are connected to the control part 13 with pull-up resistances R4 and R5 respectively.

In the lighting device 20, since the impedance between the output terminals B5 and B6 is connected in parallel to resistors R2 and R3 which act as impedance detecting means, an electrical potential Vt of the resistor R3 is changed depending on an impedance between the output terminals B5 and B6 and accordingly the outputs of the comparators CP1 and CP2 are also changed. That is to say, in the case where a load is the discharge lamp La, a resistance component of the filament of approximately a few Ω to dozens of Ω is inserted. Since the impedance is small enough for the resistance R1, the electrical potential becomes Vt < V1 < V2 and the outputs of the comparators CP1 and CP2 become "L". Next, in the case where the load is the LED lamp 4 shown in Fig. 7, since the impedance of the resistance R10 (for example, 1 kΩ) is inserted, the electrical potential becomes V1 < Vt < V2, an output of the comparator CP1 becomes "H" and an output of the comparator CP2 becomes "L". Furthermore, since the impedance becomes "∞" and the electrical potential becomes V1 < V2 < Vt when no load is mounted, either of the outputs of the comparators CP1 and CP2 becomes "H".

The operation of the control part 13 is changed depending on the outputs of the comparators CP1 and CP2. When both of the outputs of the comparators CP1 and CP2 are "H", the control part 13 is not oscillated. When no load is mounted, the oscillation is stopped as the operation of the lighting device 20. Next, when both of the outputs of the comparators CP1 and CP2 are "L", as shown Fig. 10, the control part 13 controls the frequency to change such as f1 → f2 → f3. That is to say, in the case where the load is the discharge lamp La, the control part 13 controls to change precedent preheating → discharge starting voltage → rated output. In addition, when the load is the LED lamp 4, the output of the comparator CP1 becomes "H" and the output of the comparator CP2 becomes "L" to drive at the frequency f3 so as to be the rated output without passing through the sequence such as the precedent preheating (frequency: f1) and the discharge starting voltage (frequency: f2). It should be noted that f3 is not necessarily the rated output frequency of the discharge lamp La and may be f4 for example.

Providing an impedance acting as the resistance R10 on the terminal B3 and the terminal B4 corresponding to the filament of the discharge lamp La in the LED lamp 4 allows to determine on a lighting device 20 side whether the load is the discharge lamp La or the LED lamp 4 in a simple configuration in addition to detecting a no load condition. Furthermore, determining whether the load mounted in this manner is the discharge lamp La or the LED lamp 4 and changing a frequency sequence of the lighting device 20 during stating by an output signal from impedance detecting means causes the rated lighting through an appropriate sequence in the case where the load is the discharge lamp La and causes the rated lighting without passing through the unrequited sequence in the case where the load is the LED lamp 4. That is to say, changing the frequency sequence during starting depending on the loads allows each load to be controlled suitably.

Next, an illumination device 30 equipped with the LED lamp 4 and the lighting device 20 will be described below.
As shown in Fig. 9, the illumination device 30 can use both of the discharge lamp La and the LED lamp 4 as the load for two pairs of sockets 31. Therefore, user-availability can be improved. As described above for example, while it is expected that the LED will be improved in cost and performance in future, it is possible to switch from the discharge lamp La to the LED lamp 4 when a user agrees with the cost and performance thereof. In addition, in the case where a number of illumination devices are disposed such as in office, when the discharge lamp La and the LED lamp 4 are used separately, the discharge lamp La and the LED lamp 4 which act as the light source can be changed together by changing the layout or the like.

Thus, in the LED lamp 4 of the fourth embodiment, providing the impedance acting as the resistance R10 on the terminal B3 and the terminal B4 corresponding to the filament of the discharge lamp La allows to determine on the lighting device 20 side whether the load is the discharge lamp La or the LED lamp 4, or otherwise no load is mounted, thereby the handling ability can be improved.

In addition, in the lighting device 20 in combination with the LED lamp 4, providing the impedance detecting means adapted to detect the impedance component acting as the resistance R10 between the terminals B3 and B4 corresponding to the filament of the discharge lamp La to determine whether the mounted load is the discharge lamp La or the LED lamp 4 and changing the frequency sequence of the lighting device 20 during starting by the output signal from the impedance detecting means allow each load to be controlled suitably.

Furthermore, in the illumination device 30 equipped with the LED lamp 4 and the lighting device 20, the illumination device 30 capable of using both of the discharge lamp La and the LED lamp 4 as the loads can be provided.

Thus, in the illumination device 30 equipped with the LED lamp 4 and the lighting device 20, the user may switch from the discharge lamp La to the LED lamp 4 when a user agrees with the cost and performance and a user need not to buy new one in vain. Therefore, the illumination fixture 30 which is useful for the user can be provided.

It should be noted that electronic parts or the like which constitute the inverter circuit 11 and the resonance circuit 12 used for an embodiment are not limited to the illustration and they can be changed appropriately.

### [Description of Reference Numerals]

1, 2, 3 and 4: LED lamp
10 and 20: Lighting device
30: Illumination device
A5, A6, B5 and B6: Output terminal (output part)
C1: Capacitor (capacitive component)
C4: Capacitor (capacitive component)
LED 1 - n, LED m - 1: Light emitting circuit (LED)

## Claims

1. An LED lamp (1, 2, 3) comprising:
a light emitting circuit (LED 1-n; LED m-1) having an LED adapted to emit light by electric current inputted from a discharge lamp illumination device (10);
two terminals (A3, A4) of a first side of the light emitting circuit (LED 1-n; LED m-1) and two terminals (B3, B4) of a second side of the light emitting circuit (LED 1-n; LED m-1);
a capacitive component (C1) connected between one terminal (A3) of the first side of the light emitting circuit (LED 1-n; LED m-1) and one terminal (B3) of the second side of the light emitting circuit (LED 1-n; LED m-1) and in parallel to an output of the discharge lamp illumination device (10), wherein
the LED lamp (1, 2, 3) is attachable by means of the terminals (A3, A4, B3, B4) of the LED lamp (1, 2, 3) to the discharge lamp illumination device (10);
**characterized in that** the two terminals (A3, A4) of the first side of the light emitting circuit (LED 1-n; LED m-1) are short circuited,
and that the two terminals (B3, B4) of the second side of the light emitting circuit (LED 1-n; LED m-1) are either short circuited or else one of said terminals (B3) of the second side of the light emitting circuit (LED 1-n; LED m-1) has no electrical connection to the other terminals (A3, A4, B4)of the LED lamp (1, 2, 3).

2. An illumination device using the LED lamp (1, 2, 3) according to claim 1 and a discharge lamp illumination device (10) capable of using both of a discharge lamp and the LED lamp (1, 2, 3) as loads,
the lighting device (10) has four output parts (A1, A2, B1, B2) and the capacitive component (C4) between two output parts (A1, B1) on a non-power source side and
the LED lamp (1, 2, 3) is not connected to at least one output part on the non-power source side of the lighting device (10).

## Patentansprüche

1. LED-Lampe (1, 2, 3) aufweisend:
einen Lichtemissionsschaltkreis (LED 1-n; LED m-1) mit einer LED, die dazu eingerichtet ist, Licht durch einen elektrischen Strom zu emittieren, der von einer Entladungslampenbeleuchtungseinrichtung (10) zugeführt wurde;
zwei Anschlüsse (A3, A4) einer ersten Seite des Lichtemissionsschaltkreis (LED 1-n; LED m-1) und zwei Anschlüsse (B3, B4) einer zweiten Seite des Lichtemissionsschaltkreises (LED 1-n; LED m-1);
eine kapazitive Komponente (C1), die zwischen einen Anschluss (A3) der ersten Seite des Lichtemissionsschaltkreises (LED 1-n; LED m-1) und einen Anschluss (B3) der zweiten Seite des Lichtemissionsschaltkreises (LED 1-n; LED m-1) und parallel zu einem Ausgang der Entladungslampenbeleuchtungseinrichtung (10) geschaltet ist, wobei die LED-Lampe (1, 2, 3) mittels der Anschlüsse (A3, A4, B3, B4) der LED-Lampe (1, 2, 3) an der Entladungslampenbeleuchtungseinrichtung (10) anbringbar ist;
**dadurch gekennzeichnet, dass** die zwei Anschlüsse (A3, A4) der ersten Seite des Lichtemissionsschaltkreises (LED 1-n; LED m-1) kurzgeschlossen sind,
und dass die zwei Anschlüsse (B3, B4) der zweiten Seite des Lichtemissionsschaltkreises (LED 1-n; LED m-1) entweder kurzgeschlossen sind oder einer der Anschlüsse (B3) der zweiten Seite des Lichtemissionsschaltkreises (LED 1-n; LED m-1) keine elektrische Verbindung mit den anderen Anschlüssen (A3, A4, B3, B4) der LED-Lampe (1, 2, 3) hat.

2. Beleuchtungsvorrichtung, die die LED-Lampe (1, 2, 3) nach Anspruch 1 und eine Entladungslampenbeleuchtungseinrichtung (10) verwendet, wobei die Entladungslampenbeleuchtungseinrichtung (10) in der Lage ist, sowohl eine Entladungslampe und die LED-Lampe (1, 2, 3) als Last zu verwenden, wobei die Beleuchtungseinrichtung (10) vier Ausgangsteile (A1, A2, B1, B2) und eine kapazitive Komponente (C4) zwischen zwei Ausgangsteilen (A1, B1) auf einer Nichtleistungsversorgungsseite hat und die LED-Lampe (1, 2, 3) ist mit wenigstens einem Ausgangsteil auf der Nichtleistungsversorgungsseite der Beleuchtungseinrichtung (10) nicht verbunden.

## Revendications

1. Lampe à DEL (1, 2, 3) comprenant :
un circuit d'émission de lumière (LED 1-n; LED m-1) ayant une DEL adaptée pour émettre de la lumière par un courant électrique entré depuis un dispositif d'éclairage à lampe à décharge (10) ;
deux bornes (A3, A4) d'un premier côté du circuit d'émission de lumière (LED 1-n; LED m-1) et deux bornes (B3, B4) d'un second côté du circuit d'émission de lumière (LED 1-n; LED m-1) ;
un composant capacitif (C1) connecté entre une borne (A3) du premier côté du circuit d'émission de lumière (LED 1-n; LED m-1) et une borne (B3) du second côté du circuit d'émission de lumière (LED 1-n; LED m-1) et en parallèle à une sortie du dispositif d'éclairage à lampe à décharge (10), dans lequel la lampe à DEL (1, 2, 3) peut être fixée au moyen des bornes (A3, A4, B3, B4) de la lampe à DEL (1, 2, 3) au dispositif d'éclairage à lampe à décharge (10) ;
**caractérisé en ce que** les deux bornes (A3, A4) du premier côté du circuit d'émission de lumière (LED 1-n; LED m-1) sont court-circuitées,
et **en ce que** les deux bornes (B3, B4) du second côté du circuit d'émission de lumière (LED 1-n; LED m-1) sont soit court-circuitées ou l'une desdites bornes (B3) du second côté du circuit d'émission de lumière (LED 1-n; LED m-1) n'a pas de connexion électrique avec les autres bornes (A3, A4, B4) de la lampe à DEL (1, 2, 3).

2. Dispositif d'éclairage utilisant la lampe à DEL (1, 2, 3) selon la revendication 1 et dispositif d'éclairage à lampe à décharge (10) pouvant utiliser à la fois une lampe à décharge et la lampe à DEL (1, 2, 3) comme charges, le dispositif d'éclairage (10) comporte quatre parties (A1, A2, B1, B2) et le composant capacitif (C4) entre deux parties de sortie (A1, B1) sur un côté non source d'alimentation et la lampe à DEL (1, 2, 3) n'est pas connectée à au moins une partie de sortie sur le côté non source d'alimentation du dispositif d'éclairage (10).
